# EUROPÄISCHE PATENTSCHRIFT

(11) **EP 2 189 668 B1**
(45) Veröffentlichungstag und Bekanntmachung des Hinweises auf die Patenterteilung: **24.08.2011**
(21) Anmeldenummer: 08020384.7
(22) Anmeldetag: 24.11.2008
(51) Int. Cl.: F16B 33/06

(54) **Bohrschraube**
Drill bit
Vis autoperceuse

(43) Veröffentlichungstag der Anmeldung: 26.05.2010
(73) Patentinhaber: MAGE AG, 1791 Courtaman (CH)
(72) Erfinder: Sponer, Wolfgang, 1230 Wien (AT)
(74) Vertreter: Kohler Schmid Möbus

(56) Entgegenhaltungen:
- EP-A- 1 293 685
- DE-U1- 20 203 278

## Beschreibung

Die Erfindung betrifft eine Bohrschraube mit einem sich an einen Schraubenkopf anschließenden, ein Gewinde aufweisenden Schaft aus Metall und einer Bohrspitze am freien Ende des Schaftes. Am Schraubenkopf der Bohrschraube ist ein, durch Umspritzen des Schraubenkopfes am Schraubenkopf befestigter, in Schraubenlängsachsenrichtung verlaufender Kunststoffkörper mit einer an seinem bohrspitzenabgewandten Ende ausgeformten Verbreiterung vorgesehen. Die Verbreiterung weist eine einen Anschlag ausbildende, der Bohrspitze zugewandte Auflagefläche auf.
Derartige Bohrschrauben werden zum Beispiel beim Aufbau von Fassadenkonstruktionen oder im Fensterbau zur Verbindung einer inneren mit einer äußeren Glasleiste eingesetzt.

Gattungsgemäße Bohrschrauben sind aus der DE 102 49 993 B4 bekannt. Der Kunststoffkörper dient dabei dazu, dass vom metallischen Schaft ausgebildete Kältebrücken von einer Außenoberfläche eines mittels der Bohrschrauben befestigten Teils in Richtung eines Gebäudeinnenraumes vermieden werden. Bei den bekannten gattungsgemäßen Bohrschrauben ist ein Innenantrieb, also eine Struktur, in die ein Werkzeug zum Betätigen z.B. Einschrauben der Bohrschraube eingreifen kann, im Kunststoffkörper ausgeformt.

Bei diesen Schrauben kann es beim erstmaligen Einschrauben, also wenn unter Ausformung eines Gewindes die Bohrspitze eingebohrt wird, vorkommen, dass kein ausreichendes Drehmoment vom Kunststoffkörper auf den metallischen Teil der Bohrschraube übertragen werden kann, d.h. dass der Kunststoffkörper abreißt. Dieses Problem tritt insbesondere bei gattungsgemäßen Bohrschrauben mit relativ kleinen Durchmessern auf da, aufgrund der dann nur kleinen Übergangsfläche vom Kunststoff des Kunststoffkörpers auf das Metall des Schraubenkopfes, eine verdrehfeste Verbindung zwischen Metall und Kunststoff, z.B. durch eine Strukturierung der Übergangsflächen, nur in begrenztem Maße möglich ist.

Der Erfindung liegt die Aufgabe zugrunde, eine Bohrschraube bereitzustellen, welche die Nachteile des Standes der Technik vermeidet, wobei insbesondere ein Einschrauben der kältebrückenvermeidenden Bohrschraube auch unter Anwendung größerer Drehmomente ermöglicht werden soll.

Diese Aufgabe wird durch die Gegenstände der Patentansprüche gelöst. Die abhängigen Ansprüche stellen bevorzugte Ausführungsformen der Erfindung dar.

Die erfindungsgemäße Bohrschraube weist einen sich an einen Schraubenkopf aus Metal materialschlüssig anschließenden, ein Gewinde aufweisenden Schaft aus Metall mit einer Bohrspitze am freien Ende des Schaftes auf. Durch Umspritzen des Schraubenkopfes ist am Schraubenkopf ein in Schraubenlängsachsenrichtung verlaufender Kunststoffkörper befestigt. Der Kunststoffkörper weist an seinem bohrspitzenabgewandten Ende eine Verbreiterung auf, die eine einen Anschlag ausbildende, der Bohrspitze zugewandte Auflagefläche aufweist.
Erfindungsgemäß weist der Kunststoffkörper einen in Schraubenlängsachsenrichtung den Kunststoffkörper bis zum am Schraubenkopf angeformten Innenantrieb durchdringenden Hohlraum auf, derart, dass der im Schraubenkopf ausgeformte Innenantrieb der Bohrschraube zu dessen Betätigung frei liegt. Der Innenantrieb kann z.B. als ein Imbusantrieb oder als ein Kreuzschlitz ausgebildet sein.

Die erfindungsgemäße Bohrschraube besteht also im Wesentlichen aus einer metallischen Schraube, die im Spritzgussverfahren nach oben hin, d.h. in schraubenspitzenabgewandter Richtung, mit dem Kunststoffkörper fortgesetzt ist. Der Kunststoffkörper ist im Spritzgussverfahren direkt an die metallische Schraube angespritzt. Der Hohlraum, ein Loch, eine Sacklochbohrung, ist zentrisch im Kunststoffkörper angeordnet, so dass durch den Hohlraum z.B. eine Schraubklinge direkt bis zum Innenantrieb im Schraubenkopf, d.h. im metallischen Teil der Bohrschraube, vordringen kann. So kann die Bohrschraube eingeschraubt werden, ohne dass ein zum Einschrauben benötigtes Drehmoment vom Kunststoffkörper auf die metallische Schraube übertragen werden muss. Die erfindungsgemäße Bohrschraube stellt ein Befestigungselement dar, bei dem der metallische Teil und der Kunststoffkörper biegesteif und zugfest miteinander verbunden sind. Da kein oder nur ein geringes Drehmoment vom Kunststoffkörper auf den Schaft aus Metall übertragen werden muss, wird ein zum Durchdrehen führendes Abreißen beim Einschrauben vermieden.

Um die Zugfestigkeit der Verbindung zwischen Kunststoff und Metall zu erhöhen, bildet der Schraubenkopf an dessen Übergang zum Schaft vorteilhaft einen radial umlaufenden Absatz aus.

Bevorzugt weist die bohrspitzenzugewandte Oberfläche des Absatzes eine ringförmige Aushöhlung auf, was auch aufgrund der vergrößerten Metalloberfläche, die mit dem Kunststoff umspritzt ist, zu einer Verbesserung der Verdrehungssteifigkeit der Verbindung führt.

Vorteilhaft ist in den Kunststoffkörper ein Metallring eingelegt, wobei der Metallring die Auflagefläche zumindest teilweise ausbildet. Der Metallring ist im oberen Bereich des Kunststoffkörpers angeordnet, d.h. er befindet sich im Bereich des bohrspitzenabgewandten Endes des Kunststoffkörpers. Durch den Metallring wird die Auflagefläche ausgesteift, was dazu führt, dass die Position der Oberfläche eines mit der Bohrschraube befestigten Bauteils, z.B. einer Fassadenplatte, exakt festlegbar ist.

Besonders bevorzugt ist der Kunststoffkörper im Bereich des Schraubenkopfes von einer zylindrischen Hülse aus Metall umfasst. Dabei ist der Schaft durch ein Loch in einem Bodenbereich der Hülse durchgeführt. Dadurch wird die zugfeste Verbindung zwischen Kunststoff und Metall verstärkt. Es wird so die Durchknöpfneigung der erfindungsgemäßen Bohrschraube in Zugrichtung vermindert. Da der Kunststoff des Kunststoffkörpers im umfassten Bereich nicht nach außen ausbrechen kann, ist die Verbindung zwischen Kunststoff und Metall mittels der Hülse fixiert.

Der Durchmesser des Schraubenkopfes ist dabei vorteilhaft größer als der Durchmesser des Loches im Bodenbereich der Hülse, so dass ein Ausziehen des Schraubenkopfes durch das Loch der Hülse praktisch unmöglich wird.

Bevorzugt weist die Bohrspitze mindestens eine in Längsachsenrichtung der Bohrschraube verlaufende Einkerbung und/oder mindestens eine, bevorzugt zwei, Schneidkanten am freien Ende auf. Derartig ausgestaltete Bohrspitzen ermöglichen ein leichtes Einbohren der erfindungsgemäßen Bohrschraube ohne Vorbohren durch einen Bohrer. Mittels der Schneidkanten wird das Material, in das die Bohrschraube eingeschraubt wird, zerspant.

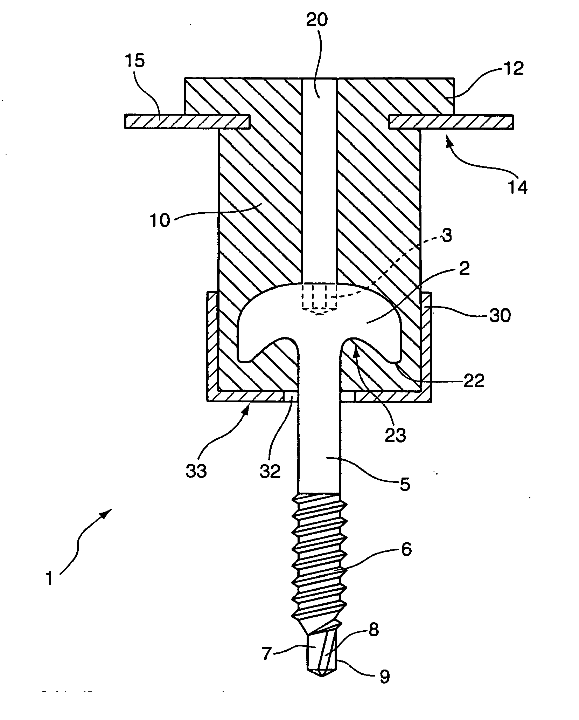

Die Erfindung wird nachfolgend anhand eines Ausführungsbeispiels unter Bezugnahme auf die Zeichnung näher erläutert.

Die Darstellungen der Zeichnung zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

In der Figur ist teilweise im Schnitt eine erfindungsgemäße Bohrschraube 1 mit einem sich an einen Schraubenkopf 2 mit Innenantrieb 3, z.B. einem Imbusschraubenkopf, anschließenden Schaft 5, der einen Abschnitt mit einem Gewinde 6 aufweist, dargestellt. Am freien Ende des Schaftes 5 ist eine Bohrspitze 7 angeformt. Der Schraubenkopf 2, der Schaft 5 und die Bohrspitze 7 sind einstückig aus Metal gefertigt. Die Bohrspitze 7 weist eine in Längsachsenrichtung der Bohrschraube 1 verlaufende Einkerbung 8 und eine Schneidkante 9 an ihrem freien Ende auf. Es versteht sich, dass der gezeigte Schaft 5 in anderen Ausführungsformen der Erfindung ein anderes Gewinde und/oder auch eine andere Schraubenspitze aufweisen kann.

Der Schraubenkopf 2 ist mit einem Kunststoff umspritzt, wodurch am Schraubenkopf 2 ein in Schraubenlängsachsenrichtung verlaufender Kunststoffkörper 10 steif angeformt ist. Der Kunststoffkörper 10 weist an seinem bohrspitzenabgewandten Ende eine Verbreiterung 12 auf, die eine einen Anschlag ausbildende, der Bohrspitze 7 zugewandte Auflagefläche 14 aufweist. In den Kunststoffkörper 10 ist ein Metallring 15 eingelegt, wobei der Metallring 15 die Auflagefläche 14 ausbildet.

Der Kunststoffkörper 10 weist einen in Schraubenlängsachsenrichtung verlaufenden, den Kunststoffkörper 10 durchdringenden Hohlraum 20 auf. Der Hohlraum 20 verläuft bis direkt an den Innenantrieb 3 des Schraubenkopfes 2, d.h. der Innenantrieb 3 selbst ist nicht von dem den Kunststoffkörper 10 ausbildenden Kunststoff, z.B. ein Polymer wie PVC, überdeckt. Dadurch liegt der im Schraubenkopf 2 ausgeformte Innenantrieb 3 der Bohrschraube 1 zu dessen Betätigung frei. Der Hohlraum 20 ist im gezeigten Ausführungsbeispiel als Sacklochbohrung ausgeführt.

Der Schraubenkopf 2 selbst ist derart ausgebildet, dass der angeformte Kunststoffkörper 10 möglichst steif befestigt ist, d.h. er weist eine die Befestigungssteifigkeit fördernde Oberflächenstruktur auf. Dazu bildet der Schraubenkopf 2 an dessen Übergang zum Schaft 5 einen radial umlaufenden Absatz 22 aus. Dieser Absatz 22 erhöht die Festigkeit der Bohrschraube 1 gegen Ausziehkräfte. Um die Verbindung zwischen Kunststoff und Metall zu verstärken, wird von der bohrspitzenzugewandten Oberfläche des Absatzes 22 eine ringförmige Aushöhlung 23 ausgebildet. Im Bereich des Schraubenkopfes 2 ist der Kunststoffkörper 10 von einer zylindrischen Hülse 30 aus Metall umfasst. Die Hülse 30 weist ein Loch 32 in ihrem Bodenbereich 33 auf, durch das der Schaft 5 der Bohrschraube 1 durchgeführt ist. Der Durchmesser des Schraubenkopfes 2, z.B. 8 Millimeter, ist größer als der Durchmesser des Loches 32 im Bodenbereich 33 der Hülse 30. Beispielsweise kann der Schaft 5 der Bohrschraube 1 einen Durchmesser von ca. 4,25 Millimetern und der Kunststoffkörper 10 einen Durchmesser von ca. 12 Millimetern aufweisen. Der Durchmesser des Loches 32 im Bodenbereich 33 der Hülse 30 ist dabei bevorzugt größer als der Durchmesser des Schafts 5 der Bohrschraube 1, bevorzugt größer als der Durchmesser des Gewindes 6, z.B. 5,5 Millimeter.

Vorgeschlagen wird eine Bohrschraube 1 mit einem sich an einen Schraubenkopf 2 aus Metall materialschlüssig anschließenden, ein Gewinde 6 aufweisenden Schaft 5 aus Metall und einer Bohrspitze 7 am freien Ende des Schaftes 5 und einem durch Umspritzen des Schraubenkopfes 2 am Schraubenkopf 2 befestigten, in Schraubenlängsachsenrichtung verlaufenden Kunststoffkörper 10, wobei der Kunststoffkörper 10 an seinem bohrspitzenabgewandten Ende eine Verbreiterung 12 aufweist, die eine einen Anschlag ausbildende, der Bohrspitze 7 zugewandte Auflagefläche 14 aufweist.
Dabei weist der Kunststoffkörper 10 einen in Schraubenlängsachsenrichtung verlaufenden, den Kunststoffkörper 10 durchdringenden Hohlraum 20 derart auf, dass ein im Schraubenkopf 2 ausgeformter Innenantrieb 3 der Bohrschraube 1 zu dessen Betätigung frei liegt.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Bohrschraube (1) mit
einem sich an einen Schraubenkopf (2) aus Metall materialschlüssig anschließenden, ein Gewinde (6) aufweisenden Schaft (5) aus Metall und einer Bohrspitze (7) am freien Ende des Schaftes (5) und
einem durch Umspritzen des Schraubenkopfes (2) am Schraubenkopf (2) befestigten, in Schraubenlängsachsenrichtung verlaufenden Kunststoffkörper (10), wobei der Kunststoffkörper (10) an seinem bohrspitzenabgewandten freien Ende eine Verbreiterung (12) aufweist, die eine einen Anschlag ausbildende, der Bohrspitze (7) zugewandte Auflagefläche (14) aufweist,
**dadurch gekennzeichnet, dass**
der Kunststoffkörper (10) einen in Schraubenlängsachsenrichtung den Kunststoffkörper (10) bis zum am Schraubenkopf (2) angeformten Innenantrieb (3) durchdringenden Hohlraum (20) aufweist derart, dass der im Schraubenkopf (2) ausgeformte Innenantrieb (3) der Bohrschraube (1) zu dessen Betätigung frei liegt.

2. Bohrschraube nach Anspruch 1,
**dadurch gekennzeichnet, dass**
der Schraubenkopf (2) an dessen Übergang zum Schaft (5) einen radial umlaufenden Absatz (22) ausbildet.

3. Bohrschraube nach Anspruch 2,
**dadurch gekennzeichnet, dass**
die bohrspitzenzugewandte Oberfläche des Absatzes (22) eine ringförmige Aushöhlung (23) aufweist.

4. Bohrschraube nach einem der Ansprüche 1 bis 3,
**dadurch gekennzeichnet, dass**
in den Kunststoffkörper (10) ein Metallring (15) eingelegt ist, wobei der Metallring (15) die Auflagefläche (14) zumindest teilweise ausbildet.

5. Bohrschraube nach einem der Ansprüche 1 bis 4,
**dadurch gekennzeichnet, dass**
der Kunststoffkörper (10) im Bereich des Schraubenkopfes (2) von einer zylindrischen Hülse (30) aus Metall umfasst ist, wobei der Schaft (5) durch ein Loch (32) in einem Bodenbereich (33) der Hülse (30) durchgeführt ist.

6. Bohrschraube nach Anspruch 5,
**dadurch gekennzeichnet, dass**
der Durchmesser des Schraubenkopfes (2) größer als der Durchmesser des Loches (32) im Bodenbereich der Hülse (30) ist.

7. Bohrschraube nach einem der Ansprüche 1 bis 6,
**dadurch gekennzeichnet, dass**
die Bohrspitze (7) mindestens eine in Längsachsenrichtung der Bohrschraube (1) verlaufende Einkerbung (8) und/oder mindestens eine, bevorzugt zwei, Schneidkanten (9) am freien Ende aufweist.

## Claims

1. Self-tapping screw (1) having
a metal shaft (5) which adjoins a metal screw head (2) in a materially engaging manner and which has a thread (6) and a drill bit (7) at the free end of the shaft (5), and a plastics member (10) which is secured to the screw head (2) by means of overmoulding the screw head (2) and which extends in the direction of the longitudinal axis of the screw, the plastics member (10) having at the free end thereof remote from the drill bit a widened portion (12) which has a support face (14) which forms a stop and which faces the drill bit (7),
**characterised in that**
the plastics member (10) has a hollow space (20) which extends in the direction of the longitudinal axis of the screw through the plastics member (10) as far as the internal drive (3) which is formed on the screw head (2) in such a manner that the internal drive (3) of the self-tapping screw (1) formed in the screw head (2) is free for the actuation thereof.

2. Self-tapping screw according to claim 1,
**characterised in that**
the screw head (2) forms a radially continuous shoulder (22) at the transition thereof to the shaft (5).

3. Self-tapping screw according to claim 2,
**characterised in that**
the surface of the shoulder (22) facing the drill bit has an annular recess (23).

4. Self-tapping screw according to any one of claims 1 to 3,
**characterised in that**
a metal ring (15) is placed in the plastics member (10), the metal ring (15) at least partially forming the support face (14).

5. Self-tapping screw according to any one of claims 1 to 4,
**characterised in that**
the plastics member (10) is surrounded in the region of the screw head (2) by a cylindrical sleeve (30) of metal, the shaft (5) being guided through a hole (32) in a base region (33) of the sleeve (30).

6. Self-tapping screw according to claim 5,
**characterised in that**
the diameter of the screw head (2) is greater than the diameter of the hole (32) in the base region of the sleeve (30).

7. Self-tapping screw according to any one of claims 1 to 6,
**characterised in that**
the drill bit (7) has at least one indentation (8) which extends in the direction of the longitudinal axis of the self-tapping screw (1) and/or at least one, preferably two, cutting edge(s) (9) at the free end.

## Revendications

1. Vis autoperceuse (1),
avec une tige (5) en métal se raccordant par liaison de matière à une tête de vis (2) en métal et présentant un filetage (6), avec une pointe de foret (7) à l'extrémité libre de la tige (5), et avec un corps en matière plastique (10) s'étendant dans la direction de l'axe longitudinal de la vis et fixé sur la tête de vis (2) en enrobant la tête de vis (2) par injection, sachant que le corps en matière plastique (10) présente, à son extrémité libre opposée à la pointe de foret, un élargissement (12) qui présente une surface d'appui (14) tournée vers la pointe de foret (7) et formant une butée,
**caractérisée en ce que** le corps en matière plastique (10) présente une cavité (20) traversant dans la direction de l'axe longitudinal de la vis le corps en matière plastique (10) jusqu'à l'entraînement intérieur (3) formé sur la tête de vis (2), de telle sorte que l'entraînement intérieur (3) de la vis autoperceuse (1), formé dans la tête de vis (2), est à découvert afin d'actionner ladite vis.

2. Vis autoperceuse selon la revendication 1, **caractérisée en ce que** la tête de vis (2) forme, à sa transition avec la tige (5), un décrochement (22) radialement entourant.

3. Vis autoperceuse selon la revendication 2, **caractérisée en ce que** la surface du décrochement (22) qui est tournée vers la pointe de foret présente une concavité annulaire (23).

4. Vis autoperceuse selon l'une des revendications 1 à 3, **caractérisée en ce qu'**un anneau métallique (15) est inséré dans le corps en matière plastique (10), sachant que l'anneau métallique (15) forme au moins en partie la surface d'appui (14).

5. Vis autoperceuse selon l'une des revendications 1 à 4, **caractérisée en ce que** le corps en matière plastique (10) est, dans la région de la tête de vis (2), entouré par une douille cylindrique (30) en métal, sachant que la tige (5) est dirigée à travers un trou (32) dans une région de fond (33) de la douille (30).

6. Vis autoperceuse selon la revendication 5, **caractérisée en ce que** le diamètre de la tête de vis (2) est supérieur au diamètre du trou (32) dans la région de fond de la douille (30).

7. Vis autoperceuse selon l'une des revendications 1 à 6, **caractérisée en ce que** la pointe de foret (7) présente, à l'extrémité libre, au moins une entaille (8) s'étendant dans la direction de l'axe longitudinal de la vis autoperceuse (1), et/ou au moins un et de préférence deux tranchants (9).
